# EUROPEAN PATENT APPLICATION

(11) **EP 4 748 815 A1**
(43) Date of publication of application: **27.05.2026**
(21) Application number: 25208190.6
(22) Date of filing: 13.10.2025
(51) Int. Cl.: C04B 41/00, C04B 41/52, C23C 4/11, F01D 25/00

(54) **THERMAL BARRIER COATING FOR GAS TURBINE ENGINE COMPONENTS**

(30) Priority: 12.11.2024 GB 202416609
(71) Applicant: Rolls-Royce plc, London N1 9FX (GB)
(72) Inventor: Brewster, James Gyaneshwara J, Derby, DE24 8BJ (GB); Cao, Xuezhen, Derby, DE24 8BJ (GB); Xiao, Ping, Derby, DE24 8BJ (GB)
(74) Representative: Rolls-Royce plc

(57) **Abstract**

A thermal barrier coating (110) for a substrate (102) that has a major surface (104). The thermal barrier coating (110) comprises: a bond coat layer (112) disposed on the major surface (104) of the substrate (102); a thermally grown oxide (TGO) layer (114) disposed on the bond coat layer (112); and a top coat layer (116) disposed on the TGO layer (114). The top coat layer (116) comprises a ceramic top coat material (120) that comprises: a matrix phase (122) comprising at least one compound of formula ABO₄, AB₃O₇ or AB₃O₉, where A is a rare-earth element, B is selected from the group consisting of niobium and tantalum, and O is oxygen; and an inclusion phase (124) that is dispersed in the matrix phase and comprising at least one compound of formula CO₂, where C is selected from the group consisting of zirconium, titanium or hafnium, and O is oxygen.

## Description

### Field

The present disclosure generally relates to a thermal barrier coating for a substrate that has a major surface, for example a gas turbine engine component. The present disclosure also generally relates to a composite article that includes the thermal barrier coating, a gas turbine engine that includes the composite article, and a method of manufacturing a composite article.

### Background

Components of various machines are typically coated to protect them during use, e.g. to minimise wear and generally improve their safe and useful life. Gas turbine aircraft engine components, particularly those located in gas paths of such engines, are required to withstand extreme temperatures and abrasive contacts for prolonged periods of time and maintaining their integrity can be critical to the safety of everyone aboard. Protective coatings of this nature are typically thermal barrier coatings and are provided as a coating system that comprises several coatings including a base coating that is applied onto the component and a ceramic top coating that is applied onto to the base coating.

Conventional thermal barrier coating materials typically include yttria stabilised zirconia, low conductivity stabilised zirconia, gadolinium zirconate, ytterbium silicates, etc.

Gadolinium zirconate may be advantageous over other materials due to its propensity to react with calcia-magnesia-alumina-silicate (CMAS), that typically deposit on the coated components during operation of the gas turbine engine, to form a rare-earth (RE)-apatite layer comprising, e.g., gadolinium calcium silicate or Gd₈Ca₂(SiO₄)₆O₂. Formation of an apatite layer may decelerate further CMAS penetration into the coating.

However, gadolinium zirconate may be less suitable as a coating material due its lower fracture toughness, thereby increasing susceptibility of the coating to cold-shock delamination during engine shutdown after the CMAS infiltration and the chemical reaction with CMAS. This may result in loss of the CMAS infiltrated and reacted layer (i.e., the RE-apatite layer) causing further degradation and loss of the coating. Additionally, due to lower fracture toughness, the coating may be more susceptible to ballistic impact damage, resulting in increased degradation during operation of the gas turbine engine.

There is a need to provide a thermal barrier coating for a substrate such as a gas turbine engine component that offers improved fracture toughness and CMAS corrosion resistance or at least provides a useful alternative to known thermal barrier coatings.

### Summary

The present disclosure provides a thermal barrier coating, a composite article, a gas turbine engine, and a method for manufacturing a composite article, as set out in the appended claims. Optional features are included in the dependent claims.

According to a first aspect, there is provided a thermal barrier coating for a substrate including a major surface, the thermal barrier coating comprises: a bond coat layer disposed on the major surface of the substrate; a thermally grown oxide (TGO) layer disposed on the bond coat layer; and a top coat layer disposed on the TGO layer, the top coat layer comprising a ceramic top coat material comprising: a matrix phase comprising at least one compound of formula ABO₄, AB₃O₇ or AB₃O₉, where A is a rare-earth element, B is selected from the group consisting of niobium and tantalum, and O is oxygen; and an inclusion phase dispersed in the matrix phase and comprising at least one compound of formula CO₂, where C is selected from the group consisting of zirconium, titanium or hafnium, and O is oxygen.

The ceramic top coat material of the thermal barrier coating includes a multi-phase material, i.e., a material that has at least one matrix phase and at least one inclusion phase. In contrast conventional ceramic top coat materials typically have a single phase. The presence of the inclusion phase(s) dispersed in the matrix phase(s) is understood to provide improved fracture toughness and calcia-magnesia-alumina-silicate (CMAS) corrosion resistance for the ceramic top coat material and the thermal barrier coating by virtue of the interface(s) between the matrix phase(s) and the inclusion phase(s).

In some embodiments, the ceramic top coat material comprises: (1) a matrix phase that comprises at least one of LaNbO₄, CeNbO₄, PrNbO₄, NdNbO₄, PmNbO₄, SmNbO₄, EuNbO₄, GdNbO₄, TbNbO₄, DyNbO₄, HoNbO₄, ErNbO₄, TmNbO₄, YbNbO₄, LuNbO₄, ScNbO₄, YNbO₄, LaNb₃O₇, CeNb₃O₇, PrNb₃O₇, NdNb₃O₇, PmNb₃O₇, SmNb₃O₇, EuNb₃O₇, GdNb₃O₇, TbNb₃O₇, DyNb₃O₇, HoNb₃O₇, ErNb₃O₇, TmNb₃O₇, YbNb₃O₇, LuNb₃O₇, ScNb₃O₇, YNb₃O₇, LaNb₃O₉, CeNb₃O₉, PrNb₃O₉, NdNb₃O₉, PmNb₃O₉, SmNb₃O₉, EuNb₃O₉, GdNb₃O₉, TbNb₃O₉, DyNb₃O₉, HoNb₃O₉, ErNb₃O₉, TmNb₃O₉, YbNb₃O₉, LuNb₃O₉, ScNb₃O₉, and YNb₃O₉; and (2) an inclusion phase that is dispersed in the matrix phase and comprises at least one of ZrO₂, TiO₂, and HfO₂.

In some embodiments, the ceramic top coat material comprises: (1) a matrix phase that comprises at least one of LaNbO₄, GdNbO₄, YNbO₄, LaNb₃O₇, GdNb₃O₇, YNb₃O₇, LaNb₃O₉, GdNb₃O₉, and YNb₃O₉; and (2) an inclusion phase that is dispersed in the matrix phase and comprises at least one of ZrO₂, TiO₂, and HfO₂.

In some embodiments, the ceramic top coat material comprises: (1) a matrix phase that comprises at least one of LaNbO₄, GdNbO₄, YNbO₄, LaNb₃O₇, GdNb₃O₇, YNb₃O₇, LaNb₃O₉, GdNb₃O₉, and YNb₃O₉; and (2) an inclusion phase that is dispersed in the matrix phase and comprises ZrO₂.

**In** some embodiments, the ceramic top coat material comprises: (1) a matrix phase that comprises at least one of LaTaO₄, CeTaO₄, PrTaO₄, NdTaO₄, PmTaO₄, SmTaO₄, EuTaO₄, GdTaO₄, TbTaO₄, DyTaO₄, HoTaO₄, ErTaO₄, TmTaO₄, YbTaO₄, LuTaO₄, ScTaO₄, YTaO₄, LaTa₃O₇, CeTa₃O₇, PrTa₃O₇, NdTa₃O₇, PmTa₃O₇, SmTa₃O₇, EuTa₃O₇, GdTa₃O₇, TbTa₃O₇, DyTa₃O₇, HoTa₃O₇, ErTa₃O₇, TmTa₃O₇, YbTa₃O₇, LuTa₃O₇, ScTa₃O₇, YTa₃O₇, LaTa₃O₉, CeTa₃O₉, PrTa₃O₉, NdTa₃O₉, PmTa₃O₉, SmTa₃O₉, EuTa₃O₉, GdTa₃O₉, TbTa₃O₉, DyTa₃O₉, HoTa₃O₉, ErTa₃O₉, TmTa₃O₉, YbTa₃O₉, LuTa₃O₉, ScTa₃O₉, and YTa₃O₉; and (2) an inclusion phase that is dispersed in the matrix phase and comprises at least one of ZrO₂, TiO₂, and HfO₂.

**In** some embodiments, the ceramic top coat material comprises: (1) a matrix phase that comprises at least one of LaTaO₄, GdTaO₄, YTaO₄, LaTa₃O₇, GdTa₃O₇, YTa₃O₇, LaTa₃O₉, GdTa₃O₉, and YTa₃O₉; and (2) an inclusion phase that is dispersed in the matrix phase and comprises at least one of ZrO₂, TiO₂, and HfO₂.

**In** some embodiments, the ceramic top coat material comprises: (1) a matrix phase that comprises at least one of LaTaO₄, GdTaO₄, YTaO₄, LaTa₃O₇, GdTa₃O₇, YTa₃O₇, LaTa₃O₉, GdTa₃O₉, and YTa₃O₉; and (2) an inclusion phase that is dispersed in the matrix phase and comprises ZrO₂.

**In** some embodiments, the ceramic top coat material comprises: (1) a matrix phase that comprises at least one of LaNbQ₄, GdNbO₄, YNbO₄, LaTaO₄, GdTaO₄, and YTaO₄; and (2) an inclusion phase that is dispersed in the matrix phase and comprises at least one of ZrO₂, TiO₂, and HfO₂.

**In** some embodiments, the ceramic top coat material comprises: (1) a matrix phase that comprises at least one of LaNbO₄, GdNbO₄, and YNbO₄; and (2) an inclusion phase that is dispersed in the matrix phase and comprises at least one of ZrO₂, TiO₂, and HfO₂.

**In** some embodiments, the ceramic top coat material comprises: (1) a matrix phase that comprises at least one of LaNbO₄, GdNbO₄, and YNbO₄; and (2) an inclusion phase that is dispersed in the matrix phase and comprises ZrO₂.

**In** some embodiments, the ceramic top coat material comprises: (1) a matrix phase that comprises at least one of LaTaO₄, GdTaO₄, and YTaO₄; and (2) an inclusion phase that is dispersed in the matrix phase and comprises at least one of ZrO₂, TiO₂, and HfO₂.

**In** some embodiments, the ceramic top coat material comprises: (1) a matrix phase that comprises at least one of LaTaO₄, GdTaO₄, and YTaO₄; and (2) an inclusion phase that is dispersed in the matrix phase and comprises ZrO₂.

**In** some embodiments, the ceramic top coat material comprises: (1) a matrix phase that comprises at least one of GdNbO₄; and (2) an inclusion phase that is dispersed in the matrix phase and comprises ZrO₂.

**In** some embodiments, there is provided a thermal barrier coating for a substrate including a major surface, the thermal barrier coating comprises: a bond coat layer disposed on the major surface of the substrate; a thermally grown oxide (TGO) layer disposed on the bond coat layer; and a top coat layer disposed on the TGO layer, the top coat layer comprising a ceramic top coat material comprising: a matrix phase comprising at least one compound of formula ABO₄, AB₃O₇ or AB₃O₉, where A is a rare-earth element, B is niobium, and O is oxygen; and an inclusion phase dispersed in the matrix phase and comprising at least one compound of formula CO₂, where C is selected from the group consisting of zirconium, titanium or hafnium, and O is oxygen.

In some embodiments, the ceramic top coat material comprises: (1) a matrix phase that comprises at least one of LaNbO₄, CeNbO₄, PrNbO₄, NdNbO₄, PmNbO₄, SmNbO₄, EuNbO₄, GdNbO₄, TbNbO₄, DyNbO₄, HoNbO₄, ErNbO₄, TmNbO₄, YbNbO₄, LuNbO₄, ScNbO₄, YNbO₄, LaNb₃O₇, CeNb₃O₇, PrNb₃O₇, NdNb₃O₇, PmNb₃O₇, SmNb₃O₇, EuNb₃O₇, GdNb₃O₇, TbNb₃O₇, DyNb₃O₇, HoNb₃O₇, ErNb₃O₇, TmNb₃O₇, YbNb₃O₇, LuNb₃O₇, ScNb₃O₇, YNb₃O₇, LaNb₃O₉, CeNb₃O₉, PrNb₃O₉, NdNb₃O₉, PmNb₃O₉, SmNb₃O₉, EuNb₃O₉, GdNb₃O₉, TbNb₃O₉, DyNb₃O₉, HoNb₃O₉, ErNb₃O₉, TmNb₃O₉, YbNb₃O₉, LuNb₃O₉, ScNb₃O₉, and YNb₃O₉; and (2) an inclusion phase that is dispersed in the matrix phase and comprises at least one of ZrO₂, TiO₂, and HfO₂.

In some embodiments, the ceramic top coat material comprises: (1) a matrix phase that comprises at least one of LaNbO₄, GdNbO₄, and YNbO₄; and (2) an inclusion phase that is dispersed in the matrix phase and comprises at least one of ZrO₂, TiO₂, and HfO₂.

In some embodiments, the ceramic top coat material comprises: (1) a matrix phase that comprises at least one of LaTaO₄, CeTaO₄, PrTaO₄, NdTaO₄, PmTaO₄, SmTaO₄, EuTaO₄, GdTaO₄, TbTaO₄, DyTaO₄, HoTaO₄, ErTaO₄, TmTaO₄, YbTaO₄, LuTaO₄, ScTaO₄, LaTa₃O₇, CeTa₃O₇, PrTa₃O₇, NdTa₃O₇, PmTa₃O₇, SmTa₃O₇, EuTa₃O₇, GdTa₃O₇, TbTa₃O₇, DyTa₃O₇, HoTa₃O₇, ErTa₃O₇, TmTa₃O₇, YbTa₃O₇, LuTa₃O₇, ScTa₃O₇, LaTa₃O₉, CeTa₃O₉, PrTa₃O₉, NdTa₃O₉, PmTa₃O₉, SmTa₃O₉, EuTa₃O₉, GdTa₃O₉, TbTa₃O₉, DyTa₃O₉, HoTa₃O₉, ErTa₃O₉, TmTa₃O₉, YbTa₃O₉, LuTa₃O₉, and ScTa₃O₉; and (2) an inclusion phase that is dispersed in the matrix phase and comprises at least one of ZrO₂, TiO₂, and HfO₂.

In some embodiments, the ceramic top coat material comprises: (1) a matrix phase that comprises at least one of LaNbO₄, GdNbO₄, YNbO₄, LaTaO₄, and GdTaO₄; and (2) an inclusion phase that is dispersed in the matrix phase and comprises at least one of ZrO₂, TiO₂, and HfO₂.

In some embodiments, there is provided a thermal barrier coating for a substrate including a major surface, the thermal barrier coating comprises: a bond coat layer disposed on the major surface of the substrate; a thermally grown oxide (TGO) layer disposed on the bond coat layer; and a top coat layer disposed on the TGO layer, the top coat layer comprising a ceramic top coat material comprising: a matrix phase comprising at least one compound of formula ABO₄, AB₃O₇ or AB₃O₉, where A is a rare-earth element, B is selected from the group consisting of niobium and tantalum, and O is oxygen; and an inclusion phase dispersed in the matrix phase and comprises ZrO₂.

In some embodiments, the ceramic top coat material comprises: (1) a matrix phase that comprises at least one of LaNbO₄, CeNbO₄, PrNbO₄, NdNbO₄, PmNbO₄, SmNbO₄, EuNbO₄, GdNbO₄, TbNbO₄, DyNbO₄, HoNbO₄, ErNbO₄, TmNbO₄, YbNbO₄, LuNbO₄, ScNbO₄, YNbO₄, LaNb₃O₇, CeNb₃O₇, PrNb₃O₇, NdNb₃O₇, PmNb₃O₇, SmNb₃O₇, EuNb₃O₇, GdNb₃O₇, TbNb₃O₇, DyNb₃O₇, HoNb₃O₇, ErNb₃O₇, TmNb₃O₇, YbNb₃O₇, LuNb₃O₇, ScNb₃O₇, YNb₃O₇, LaNb₃O₉, CeNb₃O₉, PrNb₃O₉, NdNb₃O₉, PmNb₃O₉, SmNb₃O₉, EuNb₃O₉, GdNb₃O₉, TbNb₃O₉, DyNb₃O₉, HoNb₃O₉, ErNb₃O₉, TmNb₃O₉, YbNb₃O₉, LuNb₃O₉, ScNb₃O₉, and YNb₃O₉; and (2) an inclusion phase that is dispersed in the matrix phase and comprises ZrO₂.

In some embodiments, the ceramic top coat material comprises: (1) a matrix phase that comprises at least one of LaTaO₄, CeTaO₄, PrTaO₄, NdTaO₄, PmTaO₄, SmTaO₄, EuTaO₄, GdTaO₄, TbTaO₄, DyTaO₄, HoTaO₄, ErTaO₄, TmTaO₄, YbTaO₄, LuTaO₄, ScTaO₄, YTaO₄, LaTa₃O₇, CeTa₃O₇, PrTa₃O₇, NdTa₃O₇, PmTa₃O₇, SmTa₃O₇, EuTa₃O₇, GdTa₃O₇, TbTa₃O₇, DyTa₃O₇, HoTa₃O₇, ErTa₃O₇, TmTa₃O₇, YbTa₃O₇, LuTa₃O₇, ScTa₃O₇, YTa₃O₇, LaTa₃O₉, CeTa₃O₉, PrTa₃O₉, NdTa₃O₉, PmTa₃O₉, SmTa₃O₉, EuTa₃O₉, GdTa₃O₉, TbTa₃O₉, DyTa₃O₉, HoTa₃O₉, ErTa₃O₉, TmTa₃O₉, YbTa₃O₉, LuTa₃O₉, ScTa₃O₉, and YTa₃O₉; and (2) an inclusion phase that is dispersed in the matrix phase and comprises ZrO₂.

In some embodiments, the ceramic top coat material comprises: (1) a matrix phase that comprises at least one of LaNbQ₄, GdNbO₄, YNbO₄, LaTaO₄, GdTaO₄, and YTaO₄; and (2) an inclusion phase that is dispersed in the matrix phase and comprises ZrO₂.

In some embodiments, there is provided a thermal barrier coating for a substrate including a major surface, the thermal barrier coating comprises: a bond coat layer disposed on the major surface of the substrate; a thermally grown oxide (TGO) layer disposed on the bond coat layer; and a top coat layer disposed on the TGO layer, the top coat layer comprising a ceramic top coat material comprising: a matrix phase comprising at least one compound of formula ABO₄, AB₃O₇ or AB₃O₉, where A is a rare-earth element, B is niobium, and O is oxygen; and an inclusion phase dispersed in the matrix phase and comprises ZrO₂.

In some embodiments, the ceramic top coat material comprises: (1) a matrix phase that comprises at least one of LaNbO₄, CeNbO₄, PrNbO₄, NdNbO₄, PmNbO₄, SmNbO₄, EuNbO₄, GdNbO₄, TbNbO₄, DyNbO₄, HoNbO₄, ErNbO₄, TmNbO₄, YbNbO₄, LuNbO₄, ScNbO₄, YNbO₄, LaNb₃O₇, CeNb₃O₇, PrNb₃O₇, NdNb₃O₇, PmNb₃O₇, SmNb₃O₇, EuNb₃O₇, GdNb₃O₇, TbNb₃O₇, DyNb₃O₇, HoNb₃O₇, ErNb₃O₇, TmNb₃O₇, YbNb₃O₇, LuNb₃O₇, ScNb₃O₇, YNb₃O₇, LaNb₃O₉, CeNb₃O₉, PrNb₃O₉, NdNb₃O₉, PmNb₃O₉, SmNb₃O₉, EuNb₃O₉, GdNb₃O₉, TbNb₃O₉, DyNb₃O₉, HoNb₃O₉, ErNb₃O₉, TmNb₃O₉, YbNb₃O₉, LuNb₃O₉, ScNb₃O₉, and YNb₃O₉; and (2) an inclusion phase that is dispersed in the matrix phase and comprises ZrO₂.

In some embodiments, the ceramic top coat material comprises: (1) a matrix phase that comprises at least one of LaNbO₄, GdNbO₄, and YNbO₄; and (2) an inclusion phase that is dispersed in the matrix phase and comprises ZrO₂.

In some embodiments, the ceramic top coat material includes at least 5 mol.% of the inclusion phase.

In some embodiments, the ceramic top coat material comprises from 90 to 95 mol.% of the matrix phase and from 5 to 10 mol.% of the inclusion phase.

In some embodiments, the matrix phase and the inclusion phase together form 100% by weight of the ceramic top coat material.

In some embodiments, the bond coat layer comprises one or more of an oxidation and corrosion-resistant metal alloy, aluminide and platinum aluminide.

In some embodiments, the TGO layer comprises alumina or aluminide oxides.

According to a second aspect, there is provided a composite article. The composite article includes a substrate that has a major surface. The composite article further includes the thermal barrier coating of the first aspect disposed on the major surface of the substrate. The thermal barrier coating may protect the major surface of the substrate from hot gases and may increase an operational life of the composite article.

In some embodiments the substrate is a gas turbine engine component formed from the group consisting of steels, alloys, superalloys, refractory metals, inter-metallics, and ceramic matrix composite materials.

In some embodiments the gas turbine engine component is a high pressure turbine blade or a high pressure nozzle guide vane.

According to a third aspect, there is provided a gas turbine engine including the composite article of the second aspect.

According to a fourth aspect, there is provided a method of manufacturing a composite article of the second aspect. The method comprises coating a substrate with a thermal barrier coating of the first aspect.

In some embodiments the substrate is coated with the thermal barrier coating using at least one of electron-beam physical vapour deposition (EB-PVD), suspension plasma spraying (SPS), solution precursor plasma spraying (SPPS), air plasma spraying (APS), high-velocity oxygen fuel (HVOF) processing, and suspension HVOF (S-HVOF) processing.

While the present disclosure is directed to a thermal barrier coating, the skilled person would appreciate it may also be used as an environmental barrier coating.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

The term "coating system" as used herein means a protective coating for a substrate, e.g. for a gas turbine engine component, where the protective coating comprises a plurality of coatings, at least two of those coatings being different materials. The coating system comprises a bond coat layer and a top coat layer. The coating system may include a thermally-grown oxide (TGO) coat layer that has grown between the top coat layer and the bond coat layer.

The term "thermal barrier coating" or "TBC" as used herein is a thermally insulating material that is applied to a substrate that is typically exposed to elevated temperatures. **In** some embodiments, the thermal barrier coating is a multi-layered coating, with materials and microstructures of individual layers chosen to achieve an optimal performance of the thermal barrier coating. In some embodiments the substrate is a gas turbine engine component, particularly one required to operate at elevated temperatures. Such coatings can allow for higher operating temperatures while limiting the thermal exposure of structural gas turbine engine components, extending component life by reducing oxidation and thermal fatigue. In some embodiments, the thermal barrier coating covers a portion of a substrate, e.g. a portion of a gas turning engine component. In some embodiments the thermal barrier coating covers substantially all of the substrate, e.g. substantially the external entire surface of a gas turbine engine component and optionally any internal surfaces such as cooling holes that are formed in the external surface of the gas turbine engine component.

The term "environmental barrier coating" of "EBC" as used herein is a barrier coating that is applied to a substrate that is typically exposed to environmental stresses such as icing and erosion. Environmental barrier coatings are typically applied to gas turbine engine components to increase their service life. They tend to be stabilized ceramics that can sustain a fairly high temperature gradient. They are often used to prevent water vapour degradation of gas turbine engine components that are made from SiC-SiC ceramic matric composite materials (CMCs).

The term "substrate" (aka base material) as used herein means the material upon which a thermal barrier coating is applied. In some embodiments the substrate is a gas turbine engine component, i.e. the material from which the gas turbine engine component is formed. In some embodiments the substrate is selected from steels, alloys, superalloys, refractory metals, inter-metallics, and ceramic matrix composite materials. In some embodiments the substrate is a superalloy, e.g. a titanium-based alloy or a nickel-based alloy.

The term "bond coat layer" (aka bond coating) as used herein refers to the material of a coating system that is applied to a substrate, e.g. a gas turbine engine component. It is typically the innermost layer or layers of a coating system, i.e. it provides the foundation upon which the coating system is built. In some embodiments the material is an oxidation and corrosion-resistant metal alloy (e.g. a NiCrAlY alloy or a NiCoCrAlY alloy), platinum (Pt), aluminide (alum), platinum aluminide (Pt-Al), or a combination of any of these. In some embodiments the bond coat layer is silicon, for example when the thermal barrier coating is to be used an environmental barrier coating (EBC).

The term "thermally-grown oxide (TGO) coating layer" (aka TGO coat layer) as used herein is part of a thermal barrier coating that grows at the interface of the top coat layer and the bond coat layer. It typically comprises alumina or aluminide oxides. The formation of the TGO layer typically governs the life of the top coat layer. In some embodiments the TGO is silica, for example when the thermal barrier coating is to be used an environmental barrier coating (EBC).

The term "top coat layer" (aka top coating) as used herein is the primary and first line thermally insulating material of a coating system that is applied to a substrate. It is the outermost layer of a substrate that is coated with a thermal barrier coating. In some embodiments the substrate is a gas turbine engine component and the top coat layer is the primary and first line layer that enables the gas turbine engine component to withstand elevated temperatures during use.

The term "ceramic top coat material" (aka ceramic top coating) as used herein is the primary and first line thermally insulating material of a coating system that is made by shaping and then firing an inorganic, non-metallic material at high temperature. It is typically the top coat layer of a thermal barrier coating that is applied to a substrate, e.g. a gas turbine engine component.

The term "phase" as used herein means is a region of material that is at least substantially chemically uniform, physically distinct, and typically mechanically separable from that material. The ceramic top coat material of the thermal barrier coating of the present disclosure is a composite material, i.e., a material that has a matrix phase (or matrix phases) and an inclusion phase (or inclusion phases). Conventional ceramic top coat materials typically have just one phase.

The term "rare-earth (RE) element" as used herein refers to a Group IIIB element (i.e., a lanthanoid) or scandium or yttrium in the Periodic Table of Elements. Such elements include lanthanide elements 57-71 of Periodic Table of Elements i.e. lanthanum (La, 57), cerium (Ce, 58), praseodymium (Pr, 59), Neodymium (Nd, 60), promethium (Pm, 61), samarium (Sm, 62), europium (Eu, 63), gadolinium (Gd, 64), terbium (Tb, 65), dysprosium (Dy, 66), holmium (Ho, 67), erbium (Er, 68), thulium (Tm, 69), ytterbium (Yb, 70), and lutetium (Lu), and also transition metals scandium (Sc, 21) and yttrium (Y, 39). In some embodiments the rare-earth (RE) element is gadolinium, lanthanum or yttrium.

The term "alumina" (aka aluminium oxide, aloxide, aloxite, or alundum) as used herein is a chemical compound of aluminium and oxygen with the chemical formula Al₂O₃.

The term "zirconia" (aka zirconium dioxide) as used herein is a white crystalline oxide of zirconium. It has the chemical formula ZrO₂.

The term "fracture toughness" as used herein means the ability to resist the extension of cracks in a material, particularly a ceramic material. It is typically measured by a 3-point bending test, e.g. following ASTM standard C1421-18, where the beam specimen with an ultra-sharp notch is loaded midway between two supporting bearings. It can be measured by a 4-point bending test where the beam specimen with an ultra-sharp notch is loaded by the inner two support bearings that are located one-quarter of the overall span away from the outer two support bearings.

The term "calcia-magnesia-alumina-silicate (CMAS) corrosion resistance" as used herein means the ability of a ceramic material to resist the corrosion caused by silicate deposits (i.e. dust, sand, ash), generally known as calcia-magnesia-alumino-silicate (CMAS). In some embodiments the silicate deposits further contain one or more other contents, e.g. NiO, TiO₂, NaO_{0.5}, KO_{0.5}, or FeOₓ. It is typically characterized by measuring the thickness of CMAS-reacted layer.

The term "composite article" as used herein means an article that is produced from two or more constituent materials. In some embodiments a composite article is a component that coated with a thermal barrier coating, e.g. a thermal barrier coated gas turbine engine component. In some embodiments, the composite article may further include one or more layers (e.g., abradable layers, etc.) above or below the thermal barrier coating.

The term "gas turbine engine component" as used herein means a part of a gas turbine engine, e.g. a gas turbine aircraft engine or a gas turbine marine engine. In some embodiments the gas turbine engine component is a static or a rotating component in the combustor, turbine or exhaust section of a gas turbine engine. In some embodiments the gas turbine engine component is a high pressure turbine blade or a high pressure nozzle guide vane.

The term "superalloy" as used herein means a metal alloy that is able to operate under high fractions of its melting point. Such an alloy typically has high durability, mechanical strength, thermal resilience, and longevity. Superalloys include titanium-based alloys such as Ti-6Al-4V alloy, Ti-6Al-2Sn-4Zr-2Mo alloy, Ti-5Al-2Sn-2Zr-4Cr-4Mo alloy, and Ti-10V-2Fe-3Al alloy and nickel-based alloys such as 80Ni-20Cr alloy.

The term "MCrAlY alloy" as used means an alloy of chromium (Cr), aluminium (Al), yttrium (Y) and a metal "M" typically selected from cobalt and/or nickel. Such alloys are typically used as bond coats or corrosion resistant overlays in thermal barrier coatings for gas turbine engine components, e.g. turbine blades and nozzle guide vanes. Chromium and aluminium form protective oxides while yttrium helps as a stabilising element in those oxides. The choice of M typically depends on the primary corrosion mechanism. As engine temperatures increase cobalt tends to be selected as M.

The term "electron-beam physical vapour deposition" (EB-PVD) as used herein is a form of physical vapor deposition in which a target anode is bombarded with an electron beam given off by a charged tungsten filament under high vacuum. The electron beam causes atoms from the target to transform into the gaseous phase. These atoms then precipitate into solid form, coating everything in the vacuum chamber (within line of sight) with a thin layer of the anode material.

The term "atmospheric plasma spraying" (APS) as used herein is a form of thermal spraying that utilizes a high-temperature plasma to produce high-quality coatings on a variety of substrates. This technique involves the injection of fine particles of a material, such as metals, ceramics, or polymers, into a plasma stream generated by the ionization of a gas, typically argon, through an electric arc or radio frequency discharge. The plasma stream melts and accelerates the particles towards the substrate, where they solidify and form a dense, uniform coating.

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the accompanying drawings, in which:
**FIG. 1** is a schematic sectional side view of a gas turbine engine;
**FIG. 2** is a schematic close-up sectional side view of a portion of a gas turbine engine component that has a thermal barrier coating disposed on a major surface thereof;
**FIG. 3** is a flow chart that summarises the method for manufacturing a composite article, e.g. a thermal barrier coated gas turbine engine component;
**FIG. 4A** shows x-ray diffraction patterns of GdNbO₄ and of a ceramic top coat material of thermal barrier coatings of the present disclosure where the matrix phase is GdNbO₄ and the inclusion phase is ZrO₂.
**FIG. 4B** highlights a portion of the x-ray diffraction patterns for two of the ceramic top coat materials shown in FIG. 4A.
**FIG. 5** is a graph that compares the fracture toughness of ceramic top coat materials of thermal barrier coatings of the present disclosure with known lanthanide zirconates, La₂Zr₂O₇ (LZO) and Gd₂Zr₂O₇ (GZO). Herein, the fracture toughness is measured by using 3-point bending test with ultra-sharp V-notches and blunt U-grooves.
**FIG. 6** shows CMAS corrosion results following 1300 °C / 2 h CMAS exposure for ceramic top coat materials of thermal barrier coatings of the present disclosure ceramic top coat materials where the matrix phase is GdNbO₄ and the inclusion phase is ZrO₂.

### Detailed description

Aspects and embodiments of the present disclosure will now be discussed with reference to the accompanying drawings. Further aspects and embodiments will be apparent to those skilled in the art.

Chemical elements are discussed in the present disclosure using their common chemical abbreviations, such as commonly found on a Periodic Table of Elements. For example, hydrogen is represented by its common chemical abbreviation H; helium is represented by its common chemical abbreviation He; and so forth.

The present disclosure provides a thermal barrier coating, a composite article, a gas turbine engine, and a method for manufacturing a composite article.

The thermal barrier coating is provided to coat a substrate. The substrate can take many forms and in simple terms is the material upon which a thermal barrier coating is applied.

The substrate may be a part of a machine that is exposed to conditions during use that merit the provision of a thermal barrier coating, e.g. elevated temperatures. The machine may be a gas turbine engine and the substrate may be a gas turbine engine component that is typically situated in a part of the engine that contains combusted fuel or air that is highly compressed. Such components include combustor casings, combustor tiles, high pressure turbine blades and high pressure nozzle guide vanes.

The substrate may be formed of any suitable material including steels, alloys, superalloys, refractory metals, inter-metallics, and ceramic matrix composite materials. In some embodiments the substrate is a superalloy, e.g. a titanium-based alloy or a nickel-based. The substrate may include any material based on application requirements.

Suitable alloys for the substrate may include, but are not limited to, nickel-based superalloys, cobalt-based superalloys, iron-based superalloys, low sulphur nickel-based superalloys, low sulphur cobalt-based superalloys, low sulphur iron-based superalloys, etc. Such superalloys may typically include a polycrystalline structure but may have portions with a single-crystal or directionally solidified crystalline structure. The substrate be or include nickel-based superalloys commercially available under the trademark Inconel^{®}. The substrate may include silicon carbide-silicon carbide (SiC-SiC) matrix composites.

The substrate has a major surface upon which the thermal barrier coating is provided. The major surface can take many forms and is a primary surface of the substrate that requires the application of the thermal barrier coating. In some embodiments, the thermal barrier coating covers a portion of a substrate, e.g. a portion of a gas turning engine component, typically the portion of the substrate that is primarily exposed in use to elevated temperatures. With that in mind the major surface may or may not cover a majority of the external surface of the substrate. In some embodiments the thermal barrier coating does indeed cover all or substantially all of the substrate, e.g. all or substantially all of the external entire surface of a gas turbine engine component, optionally including any internal surfaces such as cooling holes that may be formed in the external surface of the gas turbine engine component.

The thermal barrier coating comprises a bond coat layer, a thermally grown oxide (TGO) layer and a top coat layer. The bond coat layer is disposed on the major surface of the substrate. The TGO layer is disposed on the bond coat layer. The top coat layer is disposed on the TGO layer. The bond coat layer is therefore the innermost layer of the thermal barrier coating with respect to the substrate, or at least the major surface thereof. The top coat layer is the outmost layer of the thermal barrier coating with respect to the substrate, or at least the major surface thereof, and provides the first line of defence to the elevated temperatures and any corrosive fluids. The TGO layer is sandwiched between the top coat layer and the bond coat layer. The TGO layer typically grows at the interface of the top coat layer and the bond coat layer. The effective formation of the TGO layer typically governs the life of the top coat layer in particular and the thermal barrier coating in general.

The bond coat layer, which is disposed on the major surface of the substrate, provides the foundation upon which the coating system in the form of the thermal barrier coating of the present disclosure is built. The bond coat layer may comprise any suitable material for its purpose. It may comprise an oxidation and corrosion-resistant metal alloy, aluminide (alum), platinum aluminide (Pt-Al), or a combination of any of these. The metal alloy may include at least one element selected from the group consisting of aluminium, silicon and chromium in order to form a slow growing oxide scale (e.g., alumina, silica, and chromia). The bond coat layer may include an aluminium containing alloy, such as MCrAlY, where M = Nickel (Ni) and/or Cobalt (Co), or an aluminium-based intermetallic, such as nickel aluminide, containing varying amounts of platinum (Pt) and/or rare-earth elements, such hafnium (Hf). The bond coat layer may include silica.

The TGO layer, which is disposed on the bond coat layer, e.g. opposite to the major surface of the substrate, or grows on the bond coat layer, provides adhesive support for the top coat layer. The effective formation and stability of the TGO layer typically governs the life of the top coat layer in particular and the thermal barrier coating in general. Furthermore it is typically necessary to weaken the TGO layer if and when it becomes necessary to replace the top coat layer of the coating system in its entirely. The TGO layer may comprise any suitable material for its purpose, for example alumina or aluminide oxides. The TGO layer may be formed when the bond coat layer is exposed to oxygen at high temperatures. Such a layer may further impede oxidation and hot corrosion of the substrate.

The thermal barrier coating of the present disclosure is generally characterised by the composition of the top coat layer.

The top coat layer, which is disposed on the TGO layer, e.g. opposite to the bond coat layer, or is disposed on the bond coat layer and grows on the bond coat layer, comprises a composite ceramic top coat material. The ceramic top coat material comprises: (1) a matrix phase (122) comprising at least one compound of formula ABO₄, AB₃O₇ or AB₃O₉, where A is a rare-earth element, B is selected from the group consisting of niobium and tantalum, and O is oxygen; and an inclusion phase (124) that is dispersed in the matrix phase and comprising at least one compound of formula CO₂, where C is selected from the group consisting of zirconium, titanium or hafnium, and O is oxygen.

The top coat layer may be a single layer of a ceramic top coat material, or multiple layers of different ceramic top coat materials deposited by the same or different processes including electron-beam physical vapour deposition (EB-PVD), suspension plasma spraying (SPS), solution precursor plasma spraying (SPPS), air plasma spraying (APS), high-velocity oxygen fuel (HVOF) processing, and suspension HVOF (S-HVOF) processing.

The composite ceramic top coat material comprises multiple phases. Conventional ceramic top coat materials typically consist of a single, matrix phase. The addition of one or more inclusion phases, which are dispersed in one or more matrix phases, plays an important role in the top coat layer of the thermal barrier coating of the present disclosure and the thermal barrier coating of the present disclosure itself providing improved fracture toughness by virtue of the interface between the matrix phases and the inclusion phases. Without being bound by theory, the improvement in the fracture toughness may be attributed to the crack-tip shielding mechanisms, e.g., crack bridging mechanisms, crack deflection and meandering mechanisms, etc. These toughening mechanisms predominantly act around the crack tip, effectively shielding the crack from external stresses/strains and thereby increasing the fracture toughness.

In some embodiments, the total mole fraction of the matrix phase and the inclusion phase is 100 mol.%. In some embodiments, the ceramic top coat material includes greater than 0 mole (mol.)% and less than 100 mol.% of the inclusion phase.

In some embodiments, the ceramic top coat material includes a total mole fraction of the inclusion phase greater than 5 mol.%, greater than 10 mol.%, greater than 30 mol.%, greater than 50 mol.%, greater than 70 mol.%, or greater than 90 mol.%.

In some embodiments, the ceramic top coat material comprises from 5 to 15 mol.% of the matrix phase and from 85 to 95 mol.% of the inclusion phase, from 15 to 30 mol.% of the matrix phase and from 70 to 85 mol.% of the inclusion phase, from 30 to 45 mol.% of the matrix phase and from 55 to 70 mol.% of the inclusion phase, from 45 to 60 mol.% of the matrix phase and from 40 to 55 mol.% of the inclusion phase, from 60 to 75 mol.% of the matrix phase and from 25 to 40 mol.% of the inclusion phase, from 75 to 90 mol.% of the matrix phase and from 10 to 25 mol.% of the inclusion phase, or from 90 to 95 mol.% of the matrix phase and from 5 to 10 mol.% of the inclusion phase.

**In** some embodiments, the ceramic top coat material consists of from 5 to 15 mol.% of the matrix phase and from 85 to 95 mol.% of the inclusion phase, from 15 to 30 mol.% of the matrix phase and from 70 to 85 mol.% of the inclusion phase, from 30 to 45 mol.% of the matrix phase and from 55 to 70 mol.% of the inclusion phase, from 45 to 60 mol.% of the matrix phase and from 40 to 55 mol.% of the inclusion phase, from 60 to 75 mol.% of the matrix phase and from 25 to 40 mol.% of the inclusion phase, from 75 to 90 mol.% of the matrix phase and from 10 to 25 mol.% of the inclusion phase; or from 90 to 95 mol.% of the matrix phase and from 5 to 10 mol.% of the inclusion phase.

In some embodiments, the ceramic top coat material comprises from 5 to 10 mol.% of the matrix phase and from 90 to 95 mol.% of the inclusion phase, from 10 to 20 mol.% of the matrix phase and from 80 to 90 mol.% of the inclusion phase, from 20 to 30 mol.% of the matrix phase and from 70 to 80 mol.% of the inclusion phase, from 30 to 40 mol.% of the matrix phase and from 60 to 70 mol.% of the inclusion phase, from 40 to 50 mol.% of the matrix phase and from 50 to 60 mol.% of the inclusion phase; from 50 to 60 mol.% of the matrix phase and from 40 to 50 mol.% of the inclusion phase, from 60 to 70 mol.% of the matrix phase and from 30 to 40 mol.% of the inclusion phase, from 70 to 80 mol.% of the matrix phase and from 20 to 30 mol.% of the inclusion phase, from 80 to 90 mol.% of the matrix phase and from 10 to 20 mol.% of the inclusion phase, or from 90 to 95 mol.% of the matrix phase and from 5 to 10 mol.% of the inclusion phase.

In some embodiments, the ceramic top coat material consists of from 5 to 10 mol.% of the matrix phase and from 90 to 95 mol.% of the inclusion phase, from 10 to 20 mol.% of the matrix phase and from 80 to 90 mol.% of the inclusion phase, from 20 to 30 mol.% of the matrix phase and from 70 to 80 mol.% of the inclusion phase, from 30 to 40 mol.% of the matrix phase and from 60 to 70 mol.% of the inclusion phase, from 40 to 50 mol.% of the matrix phase and from 50 to 60 mol.% of the inclusion phase; from 50 to 60 mol.% of the matrix phase and from 40 to 50 mol.% of the inclusion phase, from 60 to 70 mol.% of the matrix phase and from 30 to 40 mol.% of the inclusion phase, from 70 to 80 mol.% of the matrix phase and from 20 to 30 mol.% of the inclusion phase, from 80 to 90 mol.% of the matrix phase and from 10 to 20 mol.% of the inclusion phase, or from 90 to 95 mol.% of the matrix phase and from 5 to 10 mol.% of the inclusion phase.

In some embodiments, the ceramic top coat material comprises 10 mol.% of the matrix phase and 90 mol.% of the inclusion phase, 20 mol.% of the matrix phase and 80 mol.% of the inclusion phase, 30 mol.% of the matrix phase and 70 mol.% of the inclusion phase, 40 mol.% of the matrix phase and 60 mol.% of the inclusion phase, 50 mol.% of the matrix phase and 50 mol.% of the inclusion phase, 60 mol.% of the matrix phase and 40 mol.% of the inclusion phase, 70 mol.% of the matrix phase and 30 mol.% of the inclusion phase, 80 mol.% of the matrix phase and 20 mol.% of the inclusion phase, 90 mol.% of the matrix phase and 10 mol.% of the inclusion phase, or 95 mol.% of the matrix phase and 5 mol.% of the inclusion phase.

In some embodiments, the ceramic top coat material consists of 10 mol.% of the matrix phase and 90 mol.% of the inclusion phase, 20 mol.% of the matrix phase and 80 mol.% of the inclusion phase, 30 mol.% of the matrix phase and 70 mol.% of the inclusion phase, 40 mol.% of the matrix phase and 60 mol.% of the inclusion phase, 50 mol.% of the matrix phase and 50 mol.% of the inclusion phase, 60 mol.% of the matrix phase and 40 mol.% of the inclusion phase, 70 mol.% of the matrix phase and 30 mol.% of the inclusion phase, 80 mol.% of the matrix phase and 20 mol.% of the inclusion phase, 90 mol.% of the matrix phase and 10 mol.% of the inclusion phase, or 95 mol.% of the matrix phase and 5 mol.% of the inclusion phase.

In some embodiments, the matrix phase and the inclusion phase together form 100% by mole of the ceramic top coat material.

The composite ceramic top coat material comprises: (1) a matrix phase (122) comprising at least one compound of formula ABO₄, AB₃O₇ or AB₃O₉, where A is a rare-earth element, B is selected from the group consisting of niobium and tantalum, and O is oxygen; and an inclusion phase (124) that is dispersed in the matrix phase and comprising at least one compound of formula CO₂, where C is selected from the group consisting of zirconium, titanium or hafnium, and O is oxygen

In some embodiments, the ceramic top coat material comprises: (1) a matrix phase that comprises at least one of LaNbO₄, CeNbO₄, PrNbO₄, NdNbO₄, PmNbO₄, SmNbO₄, EuNbO₄, GdNbO₄, TbNbO₄, DyNbO₄, HoNbO₄, ErNbO₄, TmNbO₄, YbNbO₄, LuNbO₄, ScNbO₄, YNbO₄, LaNb₃O₇, CeNb₃O₇, PrNb₃O₇, NdNb₃O₇, PmNb₃O₇, SmNb₃O₇, EuNb₃O₇, GdNb₃O₇, TbNb₃O₇, DyNb₃O₇, HoNb₃O₇, ErNb₃O₇, TmNb₃O₇, YbNb₃O₇, LuNb₃O₇, ScNb₃O₇, YNb₃O₇, LaNb₃O₉, CeNb₃O₉, PrNb₃O₉, NdNb₃O₉, PmNb₃O₉, SmNb₃O₉, EuNb₃O₉, GdNb₃O₉, TbNb₃O₉, DyNb₃O₉, HoNb₃O₉, ErNb₃O₉, TmNb₃O₉, YbNb₃O₉, LuNb₃O₉, ScNb₃O₉, and YNb₃O₉; and (2) an inclusion phase that is dispersed in the matrix phase and comprises at least one of ZrO₂, TiO₂, and HfO₂.

In some embodiments, the ceramic top coat material comprises: (1) a matrix phase that comprises at least one of LaTaO₄, CeTaO₄, PrTaO₄, NdTaO₄, PmTaO₄, SmTaO₄, EuTaO₄, GdTaO₄, TbTaO₄, DyTaO₄, HoTaO₄, ErTaO₄, TmTaO₄, YbTaO₄, LuTaO₄, ScTaO₄, and YTaO₄, LaTa₃O₇, CeTa₃O₇, PrTa₃O₇, NdTa₃O₇, PmTa₃O₇, SmTa₃O₇, EuTa₃O₇, GdTa₃O₇, TbTa₃O₇, DyTa₃O₇, HoTa₃O₇, ErTa₃O₇, TmTa₃O₇, YbTa₃O₇, LuTa₃O₇, ScTa₃O₇, YTa₃O₇, LaTa₃O₉, CeTa₃O₉, PrTa₃O₉, NdTa₃O₉, PmTa₃O₉, SmTa₃O₉, EuTa₃O₉, GdTa₃O₉, TbTa₃O₉, DyTa₃O₉, HoTa₃O₉, ErTa₃O₉, TmTa₃O₉, YbTa₃O₉, LuTa₃O₉, ScTa₃O₉, and YTa₃O₉; and (2) an inclusion phase that is dispersed in the matrix phase and comprises at least one of ZrO₂, TiO₂, and HfO₂.

In some embodiments, the ceramic top coat material comprises: (1) a matrix phase that comprises at least one of LaNbQ₄, GdNbO₄, YNbO₄, LaTaO₄, GdTaO₄, and YTaO₄; and (2) an inclusion phase that is dispersed in the matrix phase and comprises at least one of ZrO₂, TiO₂, and HfO₂.

In some embodiments, the ceramic top coat material comprises: (1) a matrix phase that comprises at least one of GdNbO₄; and (2) an inclusion phase that is dispersed in the matrix phase and comprises ZrO₂.

The GdNbO₄ lattice can accommodate up to 10 mol% ZrO₂, where a pair of Nb and Gd is substituted by two Zr atoms, to form single GdNb(Zr)O₄ solid solution. Higher ZrO₂ fractions (15 mol% and 20 mol%) give rise to t-Zr(Nb, Gd)O₂ precipitation, which can be stabilized to room temperature with equimolar Nb⁵⁺ and Gd³⁺ stabilizer. The tetragonal structure of Zr(Gd, Nb)O₂ can be stabilized under 1300 °C / 4 h CMAS attack.

As mentioned above, the microstructure of the composite ceramic top coat material results in the top coat layer specifically and the thermal barrier coating generally having improved fracture toughness, e.g. at least in comparison to rare-earth zirconate/hafnate ceramic top coat material-based coating systems. It also results in improved calcia-magnesia-alumino-silicate (CMAS) corrosion resistance, e.g. at least as compared to the state-of-the-art yttrium stabilized zirconia (YSZ) ceramic top coat material-based coating systems.

The matrix phase of the composite ceramic top coat material of the thermal barrier coating of the present disclosure may be configured to be anti-reactive with molten silicates, such as calcia-magnesia-alumino-silicate (CMAS). The matrix phase provides pronounced capabilities in resisting CMAS degradation, whereupon little to no reaction and/or mutual solubility occur between the matrix phase and CMAS. The inclusion phase may be configured to react with CMAS. As the inclusion phase dissolves into the CMAS, the CMAS melt is enriched with components from the inclusion phase, especially zirconium. As a result, the viscosity of the CMAS melt is significantly increased, thus mitigating the penetration of CMAS into the grain boundaries.

The ceramic top coat material may be deposited on the bond coat layer or a preformed TGO layer using any suitable method, e.g. electron-beam physical vapour deposition (EB-PVD), suspension plasma spraying (SPS), solution precursor plasma spraying (SPPS), air plasma spraying (APS), high-velocity oxygen fuel (HVOF) processing, or suspension HVOF (S-HVOF) processing.

The present disclosure provides a composite article that comprises a substrate that has a major surface and a thermal barrier coating of the present disclosure disposed on the major surface of the substrate. The substrate may be formed from a steel, an alloy, a superalloy, a refractory metal, an inter-metallic material and/or a ceramic matrix composite material. The substrate may be a gas turbine engine component that may be exposed to elevated temperatures during use including static or rotating components in the combustor, turbine or exhaust section of a gas turbine engine. Such components include high pressure turbine blades and high pressure nozzle guide vane.

The present disclosure provides a gas turbine engine that includes one or more of the aforementioned composite articles. The gas turbine engine can take many suitable forms, e.g. a turboprop engine, a turbofan engine, an open rotor engine or a turbojet engine. The gas turbine engine may have a gearbox.

The present disclosure provides a method for manufacturing a composite article of the present disclosure. The method involves coating a substrate with a thermal barrier coating of the present disclosure. The thermal barrier coating may be applied to the substrate, or at least to a major surface of the substrate by any suitable method, e.g. including
electron-beam physical vapour deposition (EB-PVD), suspension plasma spraying (SPS), solution precursor plasma spraying (SPPS), air plasma spraying (APS), high-velocity oxygen fuel (HVOF) processing, or suspension HVOF (S-HVOF) processing.

The accompanying drawings are provided to further describe the thermal barrier coating of the present disclosure.

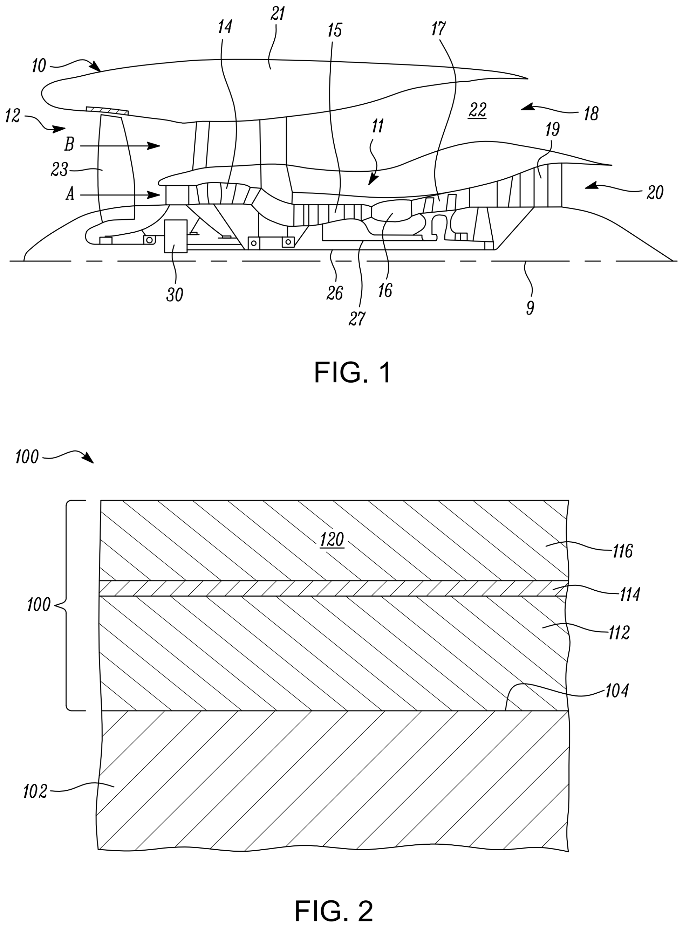

**FIG. 1** illustrates a gas turbine engine 10 having a principal rotational axis 9. The engine 10 comprises an air intake 12 which receives air and a propulsive fan 23 generates two airflows: a core airflow A and a bypass airflow B. Air intake airflow comprises the sum total of the air flowing into the operational upstream end of the engine 10, with the sum total of the core airflow A and the bypass airflow B substantially equal to the intake airflow.

The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The bypass airflow B generally provides the majority of the propulsive thrust. The epicyclic gearbox 30 is a reduction gearbox.

Various components in such a gas turbine engine are required to withstand extreme temperatures for prolonged periods of time. The safety of the passengers and crew who fly in aircraft powered these gas turbine engines depends on this.

The present disclosure is equally applicable to aero gas turbine engines, marine gas turbine engines and land-based gas turbine engines.

**FIG. 2** is a schematic sectional side view of a portion of a thermal barrier coated gas turbine engine component 100, e.g. of the gas turbine engine 10 (shown in FIG. 1). The thermal barrier coated gas turbine engine component 100 comprises a substrate 102, which is a gas turbine engine component 100 that a major surface 104, upon which a thermal barrier coating 110 has been applied.

The thermal barrier coating 110 shown in FIG. 2 includes a bond coat layer 112 disposed on the major surface 104 of the substrate 102. The thermal barrier coating 110 shown in FIG. 2 further includes a thermally grown oxide (TGO) layer 114 disposed on the bond coat layer 112 opposite to the major surface 104 of the substrate 102. The TGO layer 114 may be formed when the bond coat layer 112 is exposed to oxygen at high temperatures. The thermal barrier coating 110 shown in FIG. 2 includes a top coat layer 116 disposed on the TGO layer 114 opposite to the bond coat layer 112. The at least one top coat layer 116 includes a ceramic top coat material 120.

The thermal barrier coating 110 may be applied to more than one surface of the substrate 102. The thermal barrier coating 110 may cover the substrate 102 in its entirety.

The top coat layer 116, the TGO layer 114, and the bond coat layer 112 may be formed using vapour deposition techniques or diffusion-based processes.

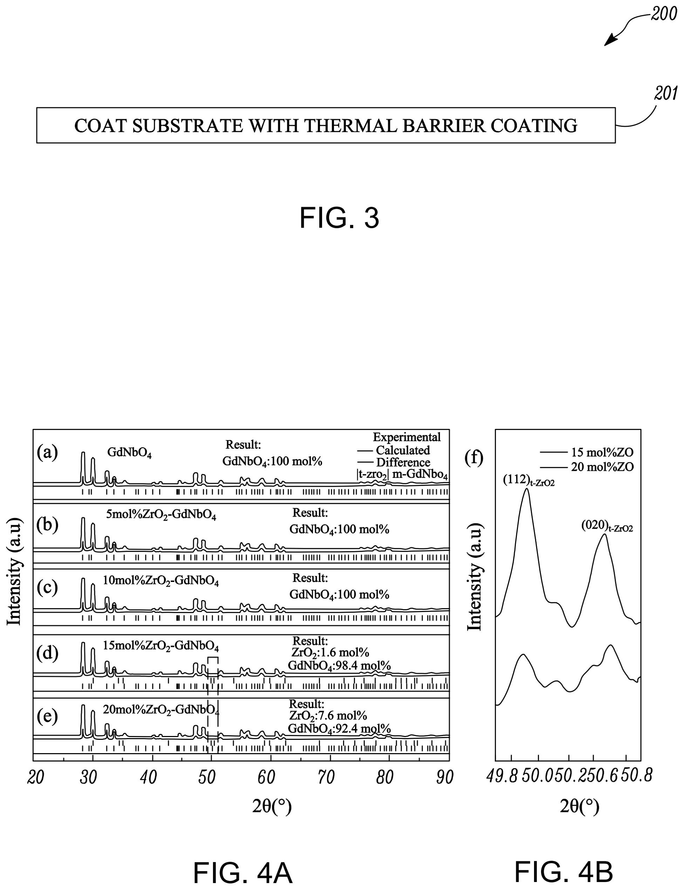

**FIG. 3** is a flow chart illustrating a method 200 for manufacturing a composite article of the present disclosure. The method 200 includes the step 201 of coating a substrate with a thermal barrier coating of the present disclosure.

The thermal barrier coating may be applied to the substrate using any suitable method including electron-beam physical vapour deposition (EB-PVD), suspension plasma spraying (SPS), solution precursor plasma spraying (SPPS), air plasma spraying (APS), high-velocity oxygen fuel (HVOF) processing, or suspension HVOF (S-HVOF) processing.

The various layers of the thermal barrier coating 110 may be sequentially coated on the major surface of the substrate using a coating head. The TGO layer may be applied to the bond coat layer or it may be grown on the bond coat layer, e.g. when the bond coat layer is exposed to oxygen at high temperatures.

As mentioned above the two-phase microstructure of the ceramic top coat material results in the top coat layer specifically and the thermal barrier coating generally having improved fracture toughness, e.g. at least as compared to the rare-earth zirconate/hafnate ceramic top coat material-based coating systems, and improved calcia-magnesia-alumino-silicate (CMAS) corrosion resistance, e.g. at least as compared to the yttrium stabilized zirconia (YSZ) ceramic top coat material-based coating systems.

The following Examples summarise the experimental work that demonstrates this. The following examples are included for illustrative purposes only.

### EXAMPLES

### Example 1

### Fracture toughness of GdNbO₄ + ZrO₂ v known lanthanide zirconates

In this example the fracture toughness of a ceramic top coat material of the thermal barrier coating of the present disclosure having a matrix phase of GdNbO₄ and an inclusion phase of ZrO₂ was compared with ceramic top coat materials, La₂Zr₂O₇ (LZO) and Gd₂Zr₂O₇ (GZO).

The gadolinium niobate (GdNbO₄) and x mol.% ZrO₂-GdNbO₄ (where x = 5, 10, 15, 20, 30) composites were synthesized by solid state reaction. Initially, commercially available powders of gadolinium oxide (Gd₂O₃, Sigma Aldrich, UK, 99.99%), niobium oxide (Nb₂O₅, Sigma Aldrich, UK, 99.99%) and zirconium dioxide (ZrO₂, Fisher Scientific Ltd, UK, 99.7%) were calcined at 1000 degree Celsius (°C) for 4 hours (h) to remove moisture and carbonates. The stoichiometrically weighted oxide powders were then planetary ball milled (400 rpm) with yttrium stabilized zirconia (YSZ) media in propan-2-ol for 4 h, followed by oven drying at 80 °C overnight. Afterwards, the stoichiometric mixture was pre-sintered in the box furnace at 1250 °C for 10 h, concomitantly followed by an additional milling process for 4 h. The targeted powders of GdNbO₄ and ZrO₂-GdNbO₄ were obtained after drying overnight. Thereafter, green pellets (ϕ 8 mm × 2 mm discs) were uniaxially cold pressed in a stain steel die and ultimately, sintered at 1600 °C for 10 h with heating and cooling rates of 10 °C / min.

The pure GdNbO₄ phase is susceptible to grain-boundary cracking during cooling process. The ZrO₂ goes into solution and helps stabilise the microstructures and mitigate grain-boundary cracks within the matrix phase (up to 10 mol% ZrO₂ in GdNbO₄). Higher ZrO₂ fractions (> 10 mol% ZrO₂) would result in the inclusion phase with stabilised tetragonal structure, whereupon the disruptive tetragonal to monoclinic phase transition (~8 vol% volume change in YSZ at 1200 °C) is precluded upon cooling process.

X-ray diffraction (XRD) patterns of GdNbO₄ (a) and various composite ceramic top coat materials of GdNbO₄ + ZrO₂ (b-e) as sintered bulk samples are shown in **FIG. 4A****.** The phase structures and phase fractions are confirmed from full-pattern refinement using Rietveld analysis. The 5 mol% ZrO₂ and 10 mol% ZrO₂ samples are each a single solid solution with a monoclinic structure (GdNbO₄, I2/a space group). The 15 mol% ZrO₂ and 20 mol% ZrO₂ samples show a coexistence of monoclinic (GdNbO₄, I2/a) and tetragonal (ZrO₂, P42/nmc) structures. Discernible peaks from the inclusion phase over a 2θ range of 49.7-50.8° could be fitted with tetragonal ZrO₂, as shown in the magnification view of **FIG. 4B****,** with no evidence of monoclinic ZrO₂ which might be generated from the martensitic tetragonal to monoclinic transition during cooling. It is therefore inferred that the high-temperature tetragonal structure of inclusion phase t-ZrO₂ (in 15 mol% and 20 mol% ZrO₂ samples) can be stabilized to room temperature with equimolar Nb⁵⁺ and Gd³⁺ stabilizers.

The solution of ZrO₂ into the matrix phase reduces the accumulation of spontaneous strain, and therefore cracking, during the transformation of a tetragonal phase to a monoclinic phase upon cooling process. Micrographs obtained for GdNbO₄ and various composite ceramic top coat materials of GdNbO₄ + ZrO₂ (5 mol%, 10 mol%, 15 mol% and 20 mol%) as sintered bulk samples show distinct microstructures. Catastrophic grain-boundary cracks are inter-connected in pure GdNbO₄, giving rise to apparent grain spallation. For GdNbO₄ containing various ZrO₂ concentrations, dense microstructures are achieved with mitigated grain-boundary cracks. Moreover, the backscattered electron (BSE) scanning electron microscopy (SEM) images show that the 5 mol% and 10 mol% ZrO₂ samples are compositionally uniform without any detectable local segregation or inclusion phase. Further increase in ZrO₂ concentrations gives rise to distinguishable Zr-enriched inclusion phase dispersed in the matrix. The microstructures are consistent with the XRD characterizations.

The fracture toughness of ceramic top coat materials of GdNbO₄ + ZrO₂ and single phase ceramic top coat materials La₂Zr₂O₇ and Gd₂Zr₂O₇ were measured using the 3-point bending test set out in ASTM standard C1421-18, wherein the preparation of ultra-sharp V-notches provided prerequisite for the credible fracture toughness assessment. For comparative studies, the samples having blunt U-grooves (root radius ~250 µm) were also tested by using 3-point bending test.

The results are summarised in Table 1 below:

**TABLE 1**

| Fracture toughness for La₂Zr₂O₇, Gd₂Zr₂O₇ & GdNbO₄ + ZrO₂ composites using 3-point bending test | | |
|---|---|---|
| Material | Fracture toughness V-Notch (MPa m^{1/2}) | Fracture toughness U-Groove (MPa m^{1/2}) |
| La₂Zr₂O₇ (LZO) | 1.01 ± 0.01 | 1.97 ± 0.08 |
| Gd₂Zr₂O₇ (GZO) | 1.17 ± 0.04 | 2.01 ± 0.11 |
| GdNbO₄ + 5 mol% ZrO₂ | 1.77 ± 0.05 | 2.64 ± 0.19 |
| GdNbO₄ + 10 mol% ZrO₂ | 1.62 ± 0.08 | 2.33 ± 0.26 |
| GdNbO₄ + 15 mol% ZrO₂ | 1.71 ± 0.05 | 2.43 ± 0.17 |
| GdNbO₄ + 20 mol% ZrO₂ | 1.79 ± 0.02 | 2.87 ± 0.15 |
| GdNbO₄ + 30 mol% ZrO₂ | 1.93 ± 0.05 | Not measured |

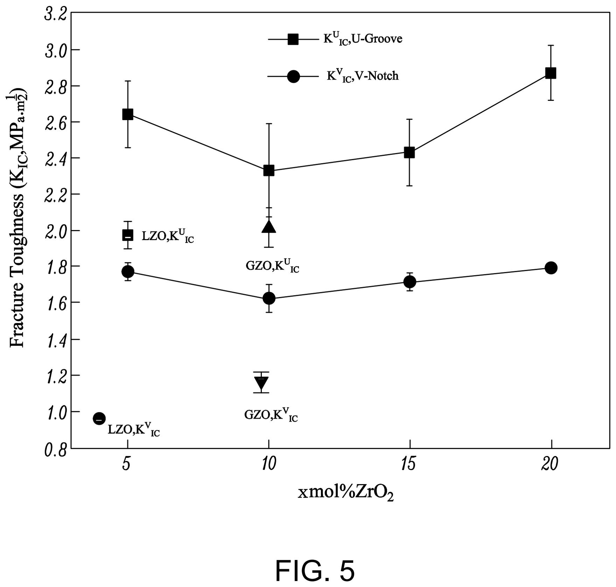

The results are also graphically represented in **FIG. 5****.** Evidently, the fracture toughness of U-groove samples is overestimated, possibly due to the insufficient stress concentration at the blunt U-groove root. Notwithstanding the incredible toughness values of U-groove samples, both of the V-notch and U-groove samples exhibit similar toughening trend with increasing ZrO₂ concentration.

These results show the highest fracture toughness reached K_{IC}≈ 1.93 ± 0.05 MPa m^{1/2} with 30 mol% ZrO₂ addition, which is ~91% higher than that of La₂Zr₂O₇ (1.01 ± 0.02 MPa m^{1/2}) and ~65% higher than the Gd₂Zr₂O₇ (1.17 ± 0.04 MPa m^{1/2}); this is a significant benefit. Without being bound by theory the improvement in toughening is ascribed to the ferroelastic domain switching (from GdNbO₄) and martensitic phase transformation toughening (from inclusion phase of t-ZrO₂ stabilized with equimolar Nb⁵⁺ and Gd³⁺) mechanisms.

### Example 2

### CMAS corrosion resistance of GdNbO₄ + ZrO₂ ceramic top coat materials

In this example the CMAS corrosion resistance of ceramic top coat materials of the thermal barrier coating of the present disclosure prepared in Example 1 was assessed with reference to scanning electron micrographs obtained using TESCAN Mira3 FEG scanning electron microscope (SEM). CMAS corrosion resistance was characterized by measuring the thickness of CMAS-reacted layer.

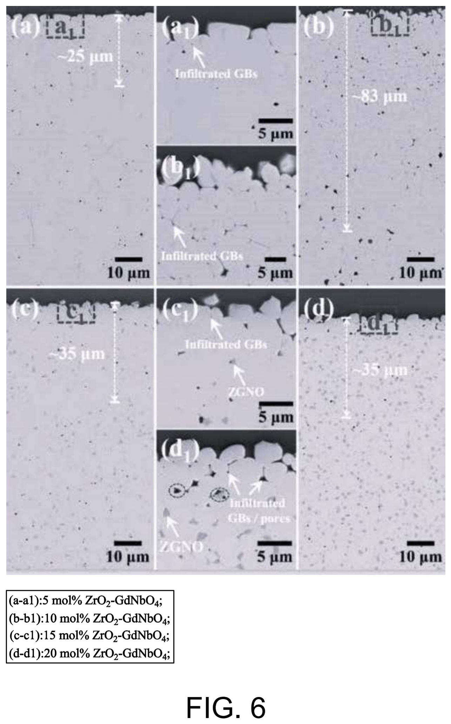

The micrographs shown in **FIG.** 6 are labelled (a), (a₁), (b), (b₁), (c), (c₁), (d) and (d₁). In each case the thickness of the CMAS-reacted layer is indicated by the CMAS infiltration depth along grain boundaries (GBs). No new phases are crystallized upon CMAS degradation in spite of the varying ZrO₂ concentrations. As noted in the key to FIG. 6, the ceramic top coat material shown in micrographs (a) and (a₁) is 5 mol% ZrO₂-GdNbO₄, with micrograph (a₁) being a close-up of the area identified as "a₁" in micrograph (a). The 'Infiltrated GBs' refers to the grain boundaries infiltrated by the CMAS melt. The ceramic top coat material shown in micrographs (b) and (b₁) is 10 mol% ZrO₂-GdNbO₄, with micrograph (b₁) being a close-up of the area identified as "b₁" in micrograph (b). The ceramic top coat material shown in micrographs (c) and (c₁) is 15 mol% ZrO₂-GdNbO₄, with micrograph (c₁) being a close-up of the area identified as "c₁" in micrograph (c) and Zr(Gd, Nb)O₂ is equimolar Gd³⁺/Nb⁵⁺ stabilized ZrO₂. The ceramic top coat material shown in micrographs (d) and (d₁) is 20 mol% ZrO₂-GdNbO₄, with micrograph (d₁) being a close-up of the area identified as "d₁" in micrograph (d).

For the 5 mol% and 10 mol% ZrO₂ samples, GdNb(Zr)O₄ exhibited inert-reactivity with CMAS, which was degraded by slight CMAS penetration along grain boundaries. The extent of CMAS-corrosive attack increased with higher ZrO₂ fraction in GdNbO₄ solid solutions.

For the 15 mol% and 20 mol% ZrO₂ samples containing t-Zr(Gd, Nb)O₂ inclusion phase, the melt penetration was constrained to ~35 µm. There was also clear evidence of Zr(Gd, Nb)O₂ dissolution, leaving pores filled with penetrated CMAS. However, no new phases were formed upon CMAS attack.

In the CMAS corrosion testing, the matrix phase (GdNbO₄) has been shown to have only limited reactivity with CMAS, and high levels of the inclusion phase dopant (ZrO₂) have a beneficial effect on resisting CMAS corrosion by increasing the CMAS viscosity.

## Claims

1. A thermal barrier coating (110) for a substrate (102) that has a major surface (104), the thermal barrier coating (110) comprises:
a bond coat layer (112) disposed on the major surface (104) of the substrate (102);
a thermally grown oxide (TGO) layer (114) disposed on the bond coat layer (112); and
a top coat layer (116) disposed on the TGO layer (114), the top coat layer (116) comprising a ceramic top coat material (120) comprising:
a matrix phase (122) comprising at least one compound of formula ABO₄, AB₃O₇ or AB₃O₉, where A is a rare-earth element, B is selected from the group consisting of niobium and tantalum, and O is oxygen; and
an inclusion phase (124) dispersed in the matrix phase and comprising at least one compound of formula CO₂, where C is selected from the group consisting of zirconium, titanium or hafnium, and O is oxygen.

2. The thermal barrier coating of claim 1, wherein the ceramic top coat material (120) comprises: (1) a matrix phase that comprises at least one of LaNbO₄, CeNbO₄, PrNbO₄, NdNbO₄, PmNbO₄, SmNbO₄, EuNbO₄, GdNbO₄, TbNbO₄, DyNbO₄, HoNbO₄, ErNbO₄, TmNbO₄, YbNbO₄, LuNbO₄, ScNbO₄, YNbO₄, LaNb₃O₇, CeNb₃O₇, PrNb₃O₇, NdNb₃O₇, PmNb₃O₇, SmNb₃O₇, EuNb₃O₇, GdNb₃O₇, TbNb₃O₇, DyNb₃O₇, HoNb₃O₇, ErNb₃O₇, TmNb₃O₇, YbNb₃O₇, LuNb₃O₇, ScNb₃O₇, YNb₃O₇, LaNb₃O₉, CeNb₃O₉, PrNb₃O₉, NdNb₃O₉, PmNb₃O₉, SmNb₃O₉, EuNb₃O₉, GdNb₃O₉, TbNb₃O₉, DyNb₃O₉, HoNb₃O₉, ErNb₃O₉, TmNb₃O₉, YbNb₃O₉, LuNb₃O₉, ScNb₃O₉, and YNb₃O₉; and (2) an inclusion phase that is dispersed in the matrix phase and comprises at least one of ZrO₂, TiO₂, and HfO₂.

3. The thermal barrier coating of claim 1, wherein the ceramic top coat material (120) comprises: (1) a matrix phase that comprises at least one of LaTaO₄, CeTaO₄, PrTaO₄, NdTaO₄, PmTaO₄, SmTaO₄, EuTaO₄, GdTaO₄, TbTaO₄, DyTaO₄, HoTaO₄, ErTaO₄, TmTaO₄, YbTaO₄, LuTaO₄, ScTaO₄, YTaO₄, LaTa₃O₇, CeTa₃O₇, PrTa₃O₇, NdTa₃O₇, PmTa₃O₇, SmTa₃O₇, EuTa₃O₇, GdTa₃O₇, TbTa₃O₇, DyTa₃O₇, HoTa₃O₇, ErTa₃O₇, TmTa₃O₇, YbTa₃O₇, LuTa₃O₇, ScTa₃O₇, YTa₃O₇, LaTa₃O₉, CeTa₃O₉, PrTa₃O₉, NdTa₃O₉, PmTa₃O₉, SmTa₃O₉, EuTa₃O₉, GdTa₃O₉, TbTa₃O₉, DyTa₃O₉, HoTa₃O₉, ErTa₃O₉, TmTa₃O₉, YbTa₃O₉, LuTa₃O₉, ScTa₃O₉, and YTa₃O₉; and (2) an inclusion phase that is dispersed in the matrix phase and comprises at least one of ZrO₂, TiO₂, and HfO₂.

4. The thermal barrier coating of claim 1, wherein the ceramic top coat material (120) comprises: (1) a matrix phase that comprises at least one of LaNbO₄, GdNbO₄, YNbO₄, LaTaO₄, GdTaO₄, and YTaO₄; and (2) an inclusion phase that is dispersed in the matrix phase and comprises at least one of ZrO₂, TiO₂, and HfO₂.

5. The thermal barrier coating of claim 1 or 2, wherein the ceramic top coat material (120) comprises: (1) a matrix phase that comprises at least one of GdNbO₄; and (2) an inclusion phase that is dispersed in the matrix phase and comprises ZrO₂.

6. The thermal barrier coating of any preceding claim, wherein the ceramic top coat material (120) includes at least 5 mol.% of the inclusion phase.

7. The thermal barrier coating of any preceding claim, wherein the ceramic top coat material (120) comprises from 90 to 95 mol.% of the matrix phase and from 5 to 10 mol.% of the inclusion phase.

8. The thermal barrier coating of any preceding claim, wherein the matrix phase and the inclusion phase together form 100% by weight of the ceramic top coat material (120).

9. The thermal barrier coating of any preceding claim, wherein the bond coat layer (112) comprises one or more of an alloy oxidation and corrosion-resistant metal alloy, aluminide and platinum aluminide.

10. The thermal barrier coating of any preceding claim, wherein the TGO layer (114) comprises alumina or aluminide oxides.

11. A composite article (100) comprising:
a substrate (102) that has a major surface (104); and
a thermal barrier coating (110) of any preceding claim disposed on the major surface (104) of the substrate (102).

12. The composite article of claim 11, wherein the substrate (102) is a gas turbine engine component formed from the group consisting of steels, alloys, superalloys, refractory metals, inter-metallics, and ceramic matrix composite materials.

13. The composite article of claim 12, wherein the gas turbine engine component is a high pressure turbine blade or a high pressure nozzle guide vane.

14. A gas turbine engine (10) including a composite article (100) of any one of claims 11 to 13.

15. A method (200) of manufacturing a composite article (100), the method comprising coating a substrate (102) with a thermal barrier coating (110) of any one of claims 1 to 10 (201).
